**Europäisches Patentamt**

**European Patent Office**

**Office européen des brevets**

(11) Publication number : **0 404 251 B1**

## EUROPEAN PATENT SPECIFICATION

(45) Date of publication of patent specification :
30.11.94 Bulletin 94/48

(51) Int. Cl.⁵ : **G11B 7/007, G11B 7/125,**
**G11B 27/36, G11B 7/013**

(21) Application number : 90201582.5

(22) Date of filing : 18.06.90

(54) Recording device for recording an optically detectable information pattern on a record carrier.

(30) Priority : 23.06.89 NL 8901591

(43) Date of publication of application :
27.12.90 Bulletin 90/52

(45) Publication of the grant of the patent :
30.11.94 Bulletin 94/48

(84) Designated Contracting States :
AT BE CH DE DK ES FR GB IT LI NL

(56) References cited :
EP-A- 0 109 130
AU-B- 513 008
AU-B- 513 376
US-A- 4 747 091
PATENT ABSTRACTS OF JAPAN vol. 9, no. 58
(P-341)(1781) 14 March 1985, & JP-A-59 193544
(CANON K.K.) 02 November 1984,
PATENT ABSTRACTS OF JAPAN vol. 9, no.
259 (P-397)(1982) 17 October 1985, & JP-A-60
107741 (SANSUI DENKI K.K.) 13 June 1985,
PATENT ABSTRACTS OF JAPAN vol. 8, no.
163 (P-290)(1600) 27 July 1984, & JP-A-59
058633 (HITACHI SEISAKUSHO K.K.) 04 April
1984,

(56) References cited :
PATENT ABSTRACTS OF JAPAN vol. 8, no.
105 (P-274)(1542) 17 May 1984, & JP-A-59
016147 (SONY K.K.) 27 January 1984,
PATENT ABSTRACTS OF JAPAN vol. 6, no.
166 (P-138)(1044) 31 August 1982, & JP-A-57
082232 (FUJITSU K.K.) 22 May 1982,

(73) Proprietor : **N.V. Philips'**
**Gloeilampenfabrieken**
**Groenewoudseweg 1**
**NL-5621 BA Eindhoven (NL)**

(72) Inventor : **Bakx, Johannes Leopoldus**
**c/o INT. OCTROOIBUREAU B.V.,**
**Prof. Holstlaan 6**
**NL-5656 AA Eindhoven (NL)**
Inventor : **Kablau, Johannes Gerardus**
**Frederikus**
**c/o INT. OCTROOIBUREAU B.V.,**
**Prof. Holstlaan 6**
**NL-5656 AA Eindhoven (NL)**

(74) Representative : **Groenendaal, Antonius**
**Wilhelmus Maria et al**
**INTERNATIONAAL OCTROOIBUREAU B.V.,**
**Prof. Holstlaan 6**
**NL-5656 AA Eindhoven (NL)**

## Description

The invention relates to a recording device for recording on a record carrier an information pattern of recording areas having first optical properties which areas alternate with intermediate areas having second optical properties, which recording device comprises optical write means including means for scanning the record carrier with the aid of a write beam, modulation means for switching the intensity of the write beam, in conformity with a bivalent signal of a specific duty cycle, between a low intensity which does not bring about a change in optical properties of the record carrier at the scanning location, and a high write intensity which brings about an optically detectable change of the record carrier at the scanning location, the recording device further comprising optical read means including means for scanning the information pattern thus formed with the aid of a read beam, the read beam being modulated by the information pattern being scanned, a radiation sensitive detector for converting the modulated read beam into a corresponding read signal, which recording device further comprises an analysis circuit for deriving from the read signal an analysis signal which indicates the deviation of the average ratio between the length of the recording areas and the intermediate areas relative to an optimum ratio defined by the duty cycle, and means for setting the write intensity, depending on the analysis signal, to a value for which the ratio between the lengths of the recording areas and the intermediate areas substantially corresponds to the optimum ratio defined by the duty cycle.

A recording device as described in the opening paragraph is known, inter alia from United States Patent Specification US 4,225,873. The prior art recording device is employed for recording signals whose average duty cycle is 50 %. The magnitude of the 2nd-harmonic signal component indicates the extent to which the ratio between the lengths of the recording areas and intermediate areas deviates from the optimum ratio defined by the duty cycle, which in that case is unity. Depending upon the magnitude of the detected 2nd-harmonic signal component the write-intensity is set to a value for which this component is substantially zero. A drawback of such a write intensity control is that it cannot be employed for recording processes in which the width of the recording areas recorded within a recording zone is not constant but varies, as is often the case in, for example, thermal recording processes where the width of the recording zone is larger at the end of the recording in this zone than at the beginning. When an information pattern comprising such recording areas of varying width is read this width variation gives rise to a comparatively large additional 2nd-harmonic component. As a result of this additional component the magnitude of the 2nd-harmonic signal component can no longer be used for write-intensity control.

It is an object of the invention to provide a recording device as defined in the opening paragraph, in which the write intensity can also be optimised in the case of recording areas of varying width. According to the invention this object is achieved by means of recording device which is characterized in that the analysis circuit comprises means for determining the position of the d.c. component of the read signal relative to minimum and maximum values of the read signal and for generating an analysis signal in the form of a signal which indicates whether the position thus determined deviates from a position defined by the duty cycle. The invention is based inter alia on the recognition of the fact that the position of the d.c. component relative to the positive and negative peak values in the read signal is indicative of the ratio between the lengths of the recording areas and the intermediate areas. Moreover, it is found that said position is hardly susceptible to width variations of the recording areas.

An embodiment of the recording device, which is very attractive because of its simplicity, is characterized in that the analysis circuit comprises means for determining a first difference value between the d.c. value of the read signal and the maximum values of the read signal, means for determining a second difference value between minimum values of the read signal and the d.c. value, and means for deriving the analysis signal on the basis of the first and the second difference value. A further embodiment of the device is characterized in that the analysis circuit comprises a high-pass filter for eliminating the d.c. component in the read signal, a first peak detector for determining the maximum signal value in the read signal filtered by the high-pass filter as the first difference value, a second peak detector for determining the minimum signal value in the filtered read signal as the second difference value, means for generating an analysis signal in the form of a signal which indicates whether the sum of the detected minimum and maximum values corresponds to an optimum value defined by the duty cycle. This embodiment advantageously utilises the fact that after elimination of the d.c. component the sum of the negative and the positive peak value indicates the position of the d.c. component relative to these peak values.

A further embodiment of the recording device is characterized in that the analysis circuit is adapted to supply an analysis signal in the form of a signal which indicates whether the ratio between the sum of the first and the second difference value and the difference between the first and the second difference value substantially corresponds to an optimum value defined by the duty cycle. This embodiment has the advantage that the influence of variations in average reflectivity of the record carrier and the influence of variations in the intensity of the read beam are eliminated. This is important in particular if the optimum write intensity corresponds to a non-zero value of the ratio between the sum and the difference of the peak values. This is the case, for example, when recording standard EFM signals for which the optimum ratio between the sum and the difference of the peak values is found to be substantially equal to 0.1.

Another embodiment of the recording device is characterized in that the device is adapted to form information patterns comprising first subpatterns and second subpatterns, the spatial frequency of the second subpatterns being lower than that of the first subpatterns and the number of first subpatterns being larger than the number of second subpatterns, the dimensions of the subpatterns being selected in such a way that during reading of information patterns the amplitude of the signal components corresponding to the first subpatterns is smaller than the amplitude of the signal components corresponding to the second subpatterns. This embodiment has the advantage that small departures from the optimum write intensity procedure comparatively large deviations in the position of the d.c. component. Since in standard EFM signal recording the number of subpatterns of low spatial frequency is substantially smaller than the number of subpatterns of comparatively high spatial frequency the optimum write intensity can be determined very accurately when a standard EFM signal is recorded. During recording of the information pattern the write intensity can be adjusted by, for example, generating an additional read beam which trails the write beam at a short distance. However, a drawback of this method is that it requires comparatively intricate technical provisions.

An embodiment which does not require the use of an additional read beam is characterized in that the device comprises means for generating a bivalent test signal, control means for causing test-information patterns corresponding to the test signal to be recorded at addressable locations on the record carrier, the control means being further adapted to cause test-information patterns to be read by the optical read means, the means for setting the write intensity being adapted to set the optimum write intensity in response to the analysis signals obtained during reading of the test-information patterns. This embodiment advantageously utilises the fact that the optimum write intensity can be determined in a separate adjustment process prior to the actual information-recording process, enabling the optical scanning means employed for recording the information pattern to be used also for determining the optimum write intensity. If a record carrier has preformed address information for addressing purposes it is advantageous that the zone employed for recording information patterns for the purpose of determining the optimum write intensity is preceded by a zone which has not yet been used for determining the optimum write intensity. Indeed, the address information may be damaged while the information pattern is recorded, so that a correct read-out of the address information is no longer guaranteed. Locating a zone which closely follows a zone with damaged address information may then give rise to problems.

Further embodiments and the advantages thereof will now be described in detail, by way of example, with reference to Figs. 1 to 13, in which

Fig. 1 shows diagrammatically a customary optical recording device,

Fig. 2 shows the variation of the intensity of a radiation beam during optical recording, the associated information pattern, and the read signal Vl produced when said information pattern is read,

Figs. 3 and 4 illustrate the relationship between recorded information patterns and the associated read signals to clarify the invention,

Figs. 5 and 9 show two different embodiments of the recording device in accordance with the invention,

Figs. 6, 7, 8 and 13 show embodiments of an analysis circuit for use in the recording device,

Fig. 10 shows an example of a control circuit for controlling the write intensity of the radiation beam,

Fig. 11 shows a possible lay-out of an inscribable record carrier provided with address information,

Fig. 12 is a flow chart of a computer program for controlling the recording device shown in Fig. 9.

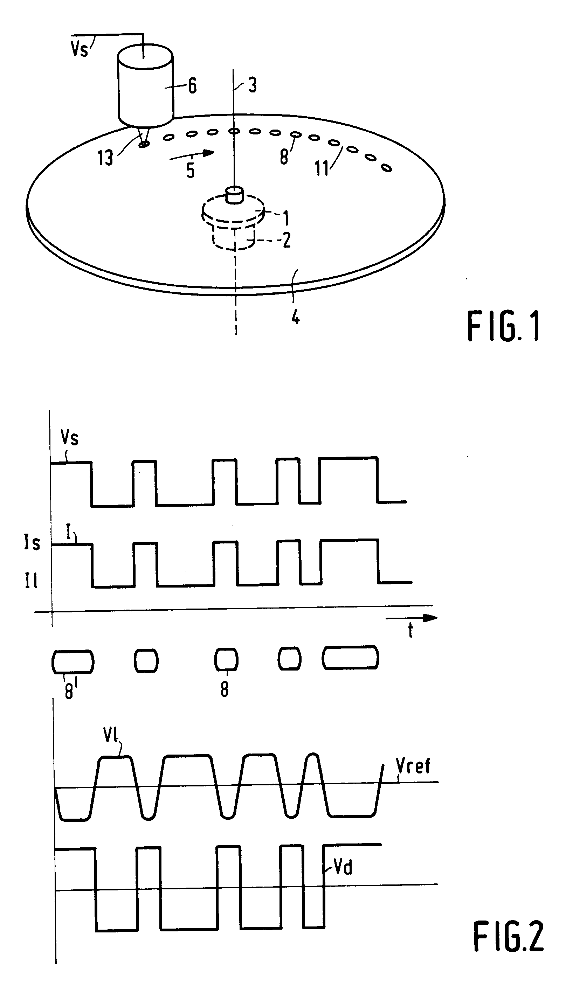

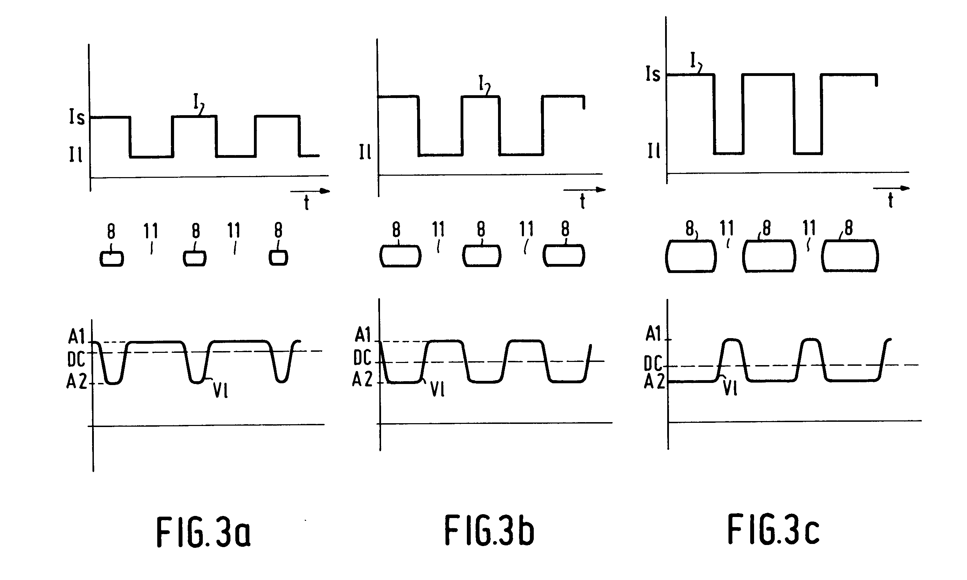

Fig. 1 shows diagrammatically an optical recording device, comprising a turntable 1 and a drive motor 2 for rotating a disc-shaped record carrier 4 about an axis 3 in a direction indicated by an arrow 5. The record carrier 4 comprises a radiation-sensitive recording layer which upon exposure to radiation of sufficiently high intensity is subjected to an optically detectable change, such as for example a change in reflectivity. Such a radiation-sensitive layer may comprise, for example, a thin metal layer which can be removed locally by exposure to a laser beam of comparatively high intensity. Alternatively, the recording layer may consist of another material such as a radiation-sensitive dye or a phase-change material, whose structure can be changed from amorphous to crystalline or *vice versa* under the influence of radiation. An optical write head 6 is arranged opposite the rotating record carrier. The optical write head 6 comprises a radiation source, for example a solid-state laser, for generating a write beam 13. The intensity I of the write beam 13 can be modulated in conformity with a control signal Vs in a customary manner. The control signal Vs and the corresponding variation I of the write beam 13 are given in Fig. 2. The intensity I of the write beam 13 varies between a write intensity Is, which is adequate to bring about detectable changes in the optical properties of the radiation-sensitive record carrier, and an intensity Il, which does not bring about any detectable changes. When the recording layer is scanned with the beam 13 whose intensity is thus modulated an information pattern of recording areas 8 having modified optical properties is formed in the recording layer, which recording areas alternate with intermediate areas 11 having unmodified optical properties. An information pattern thus formed can be read by scanning the pattern with a read beam of a constant intensity which is low enough to preclude a detectable change in optical properties. During scanning the read beam reflected from the record carrier is modulated in conformity with the information pattern being scanned. The modulation of the read beam can be detected in a customary manner by means of a radiation-sensitive detector which generates a read signal VI which is indicative of the beam modulation. The read signal VI is also shown in Fig. 2. The read signal VI is reconverted into a bivalent signal Vd by comparison of the read signal with a reference level Vref. For a reliable conversion it is desirable that the points where the read signal VI intersect the reference level are well-defined, in other words the "jitter" in the read signal VI should be minimal. As is known, jitter of the read signal in optical recording is minimal if the information pattern is symmetrical, i.e. if the average length of the recording areas 8 is equal to the average length of the intermediate areas 11. A problem which then arises is that the length of the recording areas 8 depends strongly on the write intensity Is. If the write intensity is too high the recording areas will become too long and if the write intensity is too low the recording areas will become too short. Therefore, an accurate adjustment of the write intensity is required. In a conventional method of determining the optimum write intensity, which can be employed for recording write signals having an average duty cycle of 50 %, the write intensity is adjusted so as to minimise the 2nd-harmonic distortion in the read signal VI. However, this method cannot be used in the case of recordings where as a result of, for example, thermal effects the width of the recording areas is not constant but the width of the recording zone, for example, increases from the beginning towards the end of the recording zone. The varying width introduces additional distortion into the read signal VI. This additional distortion results in an additional 2nd-harmonic component, whichs renders the adjustment of the write intensity Is unreliable. A method of determining the optimum write intensity which is less susceptible to said width variations will be explained with reference to Fig. 3. Figs. 3a, 3b and 3c give the intensity variation I, the corresponding information pattern of recording areas 8 and intermediate areas 11, and the read signal VI in the case that the write intensity Is is too low, optimum, and too high respectively.

In Fig. 3 the read signals VI vary between a maximum level A1 and a minimum level A2. The level DC represents the value of the d.c. level in the read signal VI. As will be apparent from Fig. 3, the d.c. level DC of the read signal VI is situated substantially in the middle between the levels A1 and A2 in the case that the write intensity has the optimum value. If the write intensity is too low the d.c. level DC will be situated above the middle between the levels A1 and A2, while in the case that the write level is too high the d.c. level DC will be situated below the middle between the levels A1 and A2. Thus, an optimum write intensity can be obtained by adjusting the write intensity Is to a value for which the d.c. level DC is situated substantially in the middle between the levels A1 and A2.

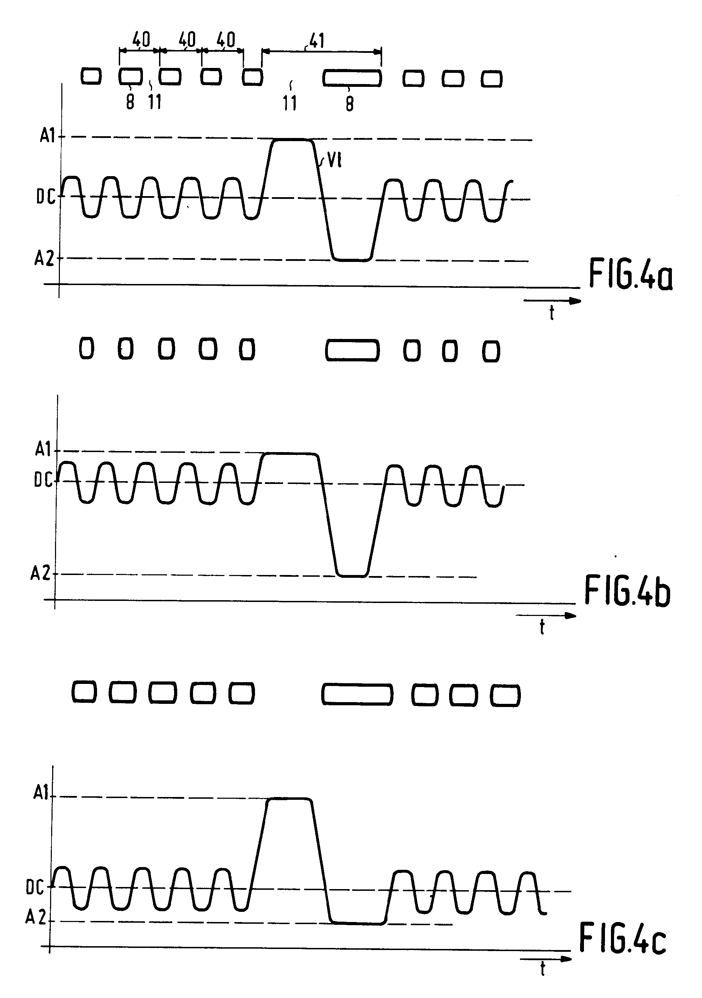

An improvement of the above method of determining the optimum intensity will be described with reference to Fig. 4a. In accordance with this method an information pattern is recorded for the purpose of determining the optimum intensity, which pattern comprises a plurality of subpatterns 40 each comprising a short recording area 8 and a short intermediate area 11 recorded by means of a write signal having a 50 % duty cycle. The information pattern further comprises a second subpattern 41 comprising a comparatively long recording area 8 and a comparatively long intermediate area 11 also recorded with the aid of a write signal having a 50 % duty cycle. The number of subpatterns 40 is selected to be substantially larger than the number of subpatterns 41. Fig. 4a shows the read signal VI obtained in the case of reading with the aid of an optical read device.

The dimensions of the subpatterns 40 are selected in such a way that the amplitude of the signal components in the read signal VI corresponding to said subpatterns 40 is substantially smaller than the amplitude of the signal components corresponding to the subpatterns 41. This can be achieved by selecting the dimensions of the subpatterns 40 in such a way that only the 1st harmonic of this pattern is situated below the optical cut-off frequency of the optical scanning device. The dimensions of the subpatterns 41 are selected in such a way that at least the 1st and the 2nd harmonic of this pattern are situated below said optical cut-off frequency. The d.c. level DC in the read signal VI is dictated mainly by the signal components corresponding to the subpatterns 40. The difference between the maximum value A1 and the minimum value A2 of the read signal VI is dictated exclusively by the value corresponding to the subpattern 41. As a change in write power Is has a substantially larger influence on the ratio between the length of the recording areas 8 and the intermediate areas 11 of the subpatterns than on the ratio between said lengths for the subpatterns 41 the d.c. level DC will also be far more susceptible to write-level variations in the case of the method illustrated in Fig. 4 than in the case of the method illustrated in Fig. 3, where the amplitude of the read signal VI is the same for all the subpatterns occurring in the information pattern. All this means that the optimum write power can be determined far more accurately by means of the method illustrated in Fig. 4a.

In addition to the information pattern shown in Fig. 4a, which has been recorded with an optimum write intensity, similar information patterns are shown in Figs. 4b and 4c, which have been recorded with a write level which is too low and which is too high respectively. As will be apparent from Fig. 4 the d.c. level DC in the case of the optimum write intensity is again situated substantially in the middle between the maximum signal value (A1) and the minimum signal value (A2) in the signal VI, while in the case of a write level which is too low or too high the d.c. level DC is situated respectively above and below said middle. The information pattern shown in Fig. 4 is only one of the possible information patterns comprising a comparatively large number of subpatterns consisting of short areas (8 or 11) and a comparatively small number of subpatterns consisting of long areas (8 or 11). A subpattern which is also very suitable is a pattern corresponding to a standard EFM signal. Such a pattern comprises areas of a length corresponding to at least 3 bits (I3-effect) and at the most 11 bits (I11 effect). Approximately one third of all the effects in such an EFM pattern are I3 effects, whereas only 4 % of all the effects are I11 effects. The dimensions of the I3 effects are such that only the fundamental of these effects is situated below the optical cut-off frequency of the optical read system. Of the I11 effects at least the 1st, the 2nd and the 3rd harmonics are situated below the optical cut-off frequency.

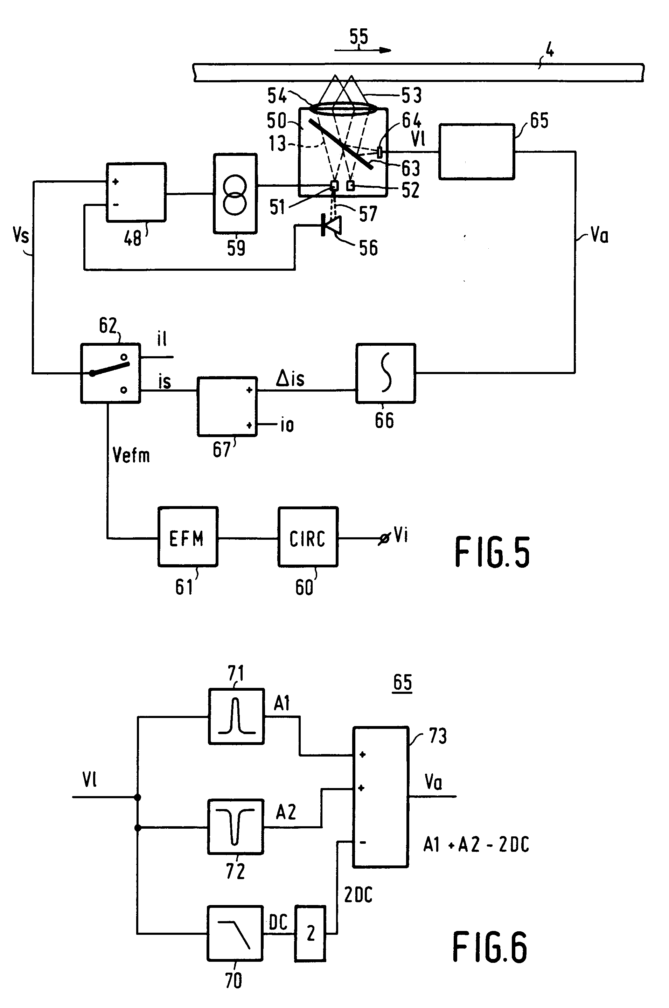

Fig. 5 shows a first embodiment of the recording device in accordance with the invention. The recording device comprises an optical head 50 comprising a first semiconductor laser 51 for generating the write beam 13 and a second semiconductor laser 52 for generating a read beam 53. The write beam 13 and the read beam 53 are directed to the record carrier 4 by means of an optical system comprising an objective 54, which record carrier is moved past the optical head 50 in the direction indicated by an arrow 55. This is effected in a customary manner in such a way that, viewed in the direction of the arrow 55, the read beam 53 is incident on the record carrier 4 at a short distance behind the landing spot of the write beam 13, so that the landing spot of the read beam 53 follows the path described by the landing spot of the write beam 13. For a more detailed description of optical systems by means of which both a write beam and a separate read beam can be produced simultaneously reference is made to US 4,255,873 and US 4,488,277.

The intensity I of the write beam 13 is controlled to assume a value dictated by the signal Vs. For this purpose the recording device comprises a radiation-sensitive diode 56, which is arranged to detect the beam 57 which issues from the back of the semiconductor laser 51 and which has an intensity proportional to that of the write beam. The radiation-sensitive diode 56 then produces a signal current proportional to the detected intensity. The signal Vs and said signal current are compared with each other in a comparator circuit 58. A signal which is indicative of the result of the comparison is applied to a controllable current source 59, which generates a control current for the semiconductor laser 51 in such a way that the signal current produced by the diode 56, and hence the intensity of the write beam 13, is controlled to assume the value dictated by the write signal Vs.

The recording device further comprises a cascade arrangement of a conventional CIRC encoding circuit 60 and an EFM modulator 61 for converting an applied information signal Vi into an EFM signal Vefm modulated in conformity with the CD standard. The signal Vefm is applied to a control input of a controllable switch 62 of a type which depending on the logic value of the signal applied to its control input transfers one of the two inputs signals $\underline{is}$ or $\underline{il}$ to its output. The signal on the output of the switch 62 is applied to the comparator circuit 58 as the signal Vs. The signal $\underline{is}$ defines the write intensity Is and the signal $\underline{il}$ defines the intensity Il. An information pattern representing the signal Vi is recorded as follows.

The CIRC encoding circuit 60 and the EFM modulator 61 convert the signal Vi into an EFM modulated bivalent signal Vefm. This signal controls the switch 62 in such a way that the signal $\underline{il}$ and $\underline{is}$ are alternately applied to the comparator circuit 58, as a result of which the intensity of the write beam is switched between the write intensity Is defined by this signal $\underline{is}$ and the intensity Il defined by the signal $\underline{il}$, so that an information pattern corresponding to the signal Vefm is recorded on the record carrier. Briefly after this recording the information pattern thus formed is scanned by the read beam 53. The read beam is reflected from the record carrier 4, the reflected beam being modulated in conformity with the information pattern being scanned. The read beam thus modulated is directed to a radiation-sensitive detector 64 $\underline{via}$ a semitransparent mirror 63, which detector generates a read signal VI which is indicative of the beam modulation. The read signal VI is applied to an analysis circuit 65, which generates a signal Va which indicates the extent to which the d.c. level DC deviates from the value corresponding to the optimum write intensity. The signal Va is applied to an integrating circuit 66. An output signal Δi of the integrating circuit is applied to an input of an adder circuit 67. A signal $\underline{io}$ corresponding to a constant intensity is applied to the other input of the adder circuit 67. An output signal which is indicative of the sum of the signal $\underline{io}$ and the signal Δi is applied to the switch 62 as the signal $\underline{is}$. If in the recording device shown in Fig. 5 the write intensity Is deviates from the optimum value this will be indicated by the analysis signal Va in that it has a non-zero signal value. As a result of this, the signal $\underline{si}$ on the output of the integrating circuit 66 will change, so that the write intensity Is is controlled towards the optimum value. This results in continuous control of the write intensity Is, so as to maintain the write intensity Is is substantially at the optimum value.

Fig. 6 shows a first embodiment of the analysis circuit 65, comprising a low-pass filter 70 for determining the d.c. level DC in the read signal VI. The analysis circuit 65 further comprises a positive-peak detector 71 for determining the maximum value A1 in the read signal VI and a negative-peak detector 72 for determining the minimum value A2 in the read signal VI. The output signals of the peak detectors 71 and 72 are applied to non-inverting inputs of an adder circuit 73, while the output signal of the low-pass filter 70, after being amplified to twice its value, is applied to an inverting input of the adder circuit 73, so that the output signal of the adder circuit 73, which signal constitutes the analysis signal Va, is equal to Va = A1 + A2 - 2DC and consequently indicates the extent to which the position of the signal value DC deviates from the middle between the maximum signal value A1 and the minimum signal value A2.

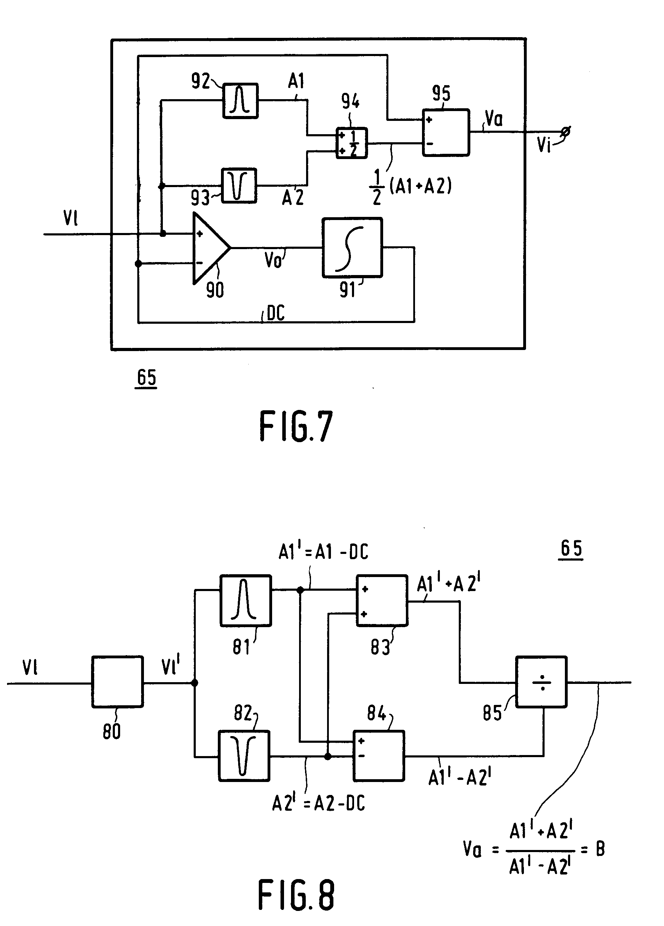

Fig. 7 shows yet another embodiment of the analysis circuit 65, comprising a comparator 90 to which the read signal VI and the reference signal representing the value DC are applied to the non-inverting input and the inverting input respectively. The output signal of the comparator 90 is applied to an integrating circuit 91. The read signal VI is further applied to a positive peak detector 92 and a negative-peak detector 93, which respectively detect the maximum and the minimum signal level in the read signal VI and which apply signals which are indicative of said signal levels to an adder circuit 94 having a gain factor of 1/2, so that the signal level on the output of the adder circuit 64 is situated halfway the minimum and the maximum signal level of the corrected read signal VI. The signal on the output of the adder circuit 94 is applied to the inverting input of a differential amplifier 95 and the reference signal, which is representative of the value DC, is applied from the integrating circuit 91 to the non-inverting input of the differential amplifier 95. An output signal of the differential amplifier 95, which signal is indicative of the difference between two input signals of the differential amplifier functions as the analysis signal Va. The analysis circuit shown in Fig. 7 operates as follows. As a result of the feedback from the integrating circuit 91 to the inverting input of the comparator 91 the reference signal on the output of the integrating circuit will be adjusted to a level for which the output signal Vo of the comparator 30 averages zero, so that the signal value on the output of the integrator 91 indicates the level of the d.c. component in the read signal V2. The analysis signal Va again indicates the extent to which the position of the d.c. level deviates from the midle between the minimum and the maximum level of the read signal.

Fig. 8 shows a third embodiment of the analysis circuit 65, comprising a high-pass filter 80 for eliminating the d.c. component from the read signal VI. The signal VI', from which the d.c. component has thus been removed, is applied to a positive-peak detector 81 and to a negative-peak detector 82. The signal value A1' on the output of the positive-peak detector 81 is equal to the signal value A1 minus the value d.c. The signal value A2' on the output of the negative peak detector 82 is equal to the signal value A2 minus the value DC. By means of an adder circuit 83 the sum of A1' and A2' is determined and by means of a subtractor circuit 84 the difference between A1' and A2' is determined. A dividing circuit 85 determines the quotient of the signal values on the outputs of the adder circuit 83 and the subtractor circuit 84. This quotient, hereinafter referred to as $\beta$, also indicates the extent to which the position of the d.c. level DC deviates from the middle between the signal values A1 and A2. The output signal of the dividing circuit, which indicates the value of $\beta$, again functions as the analysis signal Va. As a result of the division by the difference between A1' and A2' it is achieved that intensity variations in the radiation generated by the semiconductor laser 53 or variations in the average reflectivity of the record carrier no longer have any influence on the signal value of the analysis signal Va. The advantage of this will be explained hereinafter.

Although satisfactory results are obtained when during recording of an EFM signal the write intensity Is is set to a value corresponding to a d.c. level DC situated exactly in the middle between the maximum and the minimum value of the read signal, this setting is found not to be exactly optimal. For symmetrical EFM information patterns the value D is not exactly zero but is approximately 0.1. This is a result of the fact that the d.c. influence of components in the read signal corresponding to patterns having a high spatial frequency is smaller than that of signal components corresponding to patterns having a low spatial frequency. To optimise the write intensity for recording EFM modulated signals the write intensity Is is therefore suitably set to a value for which $\beta$ is substantially equal to 0.1. For this setting, for which $\beta$ has a non-zero value, the elimination of the effect of intensity variations is very important because without this elimination an accurate adjustment is difficult to achieve.

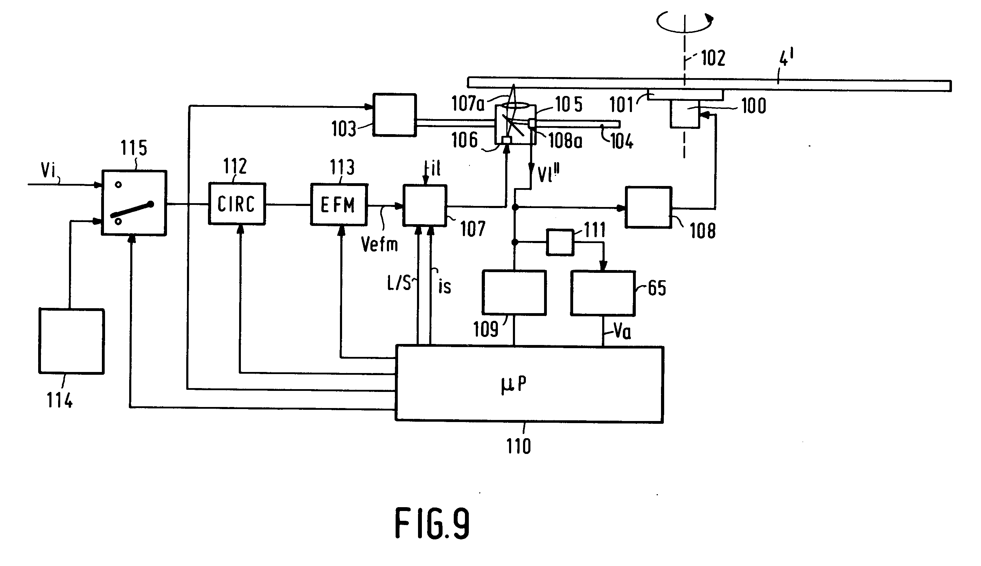

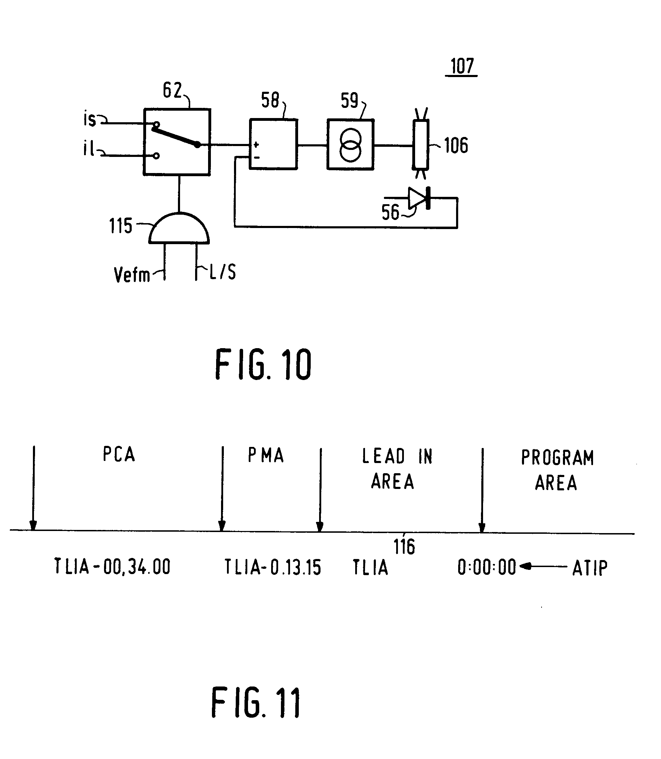

In the embodiment of the recording device in accordance with the invention described above the write intensity is corrected continuously. The drawback of this recording device is that for this purpose an additional read beam must be generated, which is a comparatively difficult technical problem. Another method which mitigates this drawback will now be described. In this embodiment the optimum write intensity is determined in a separate set-up cycle prior to recording of the information signal Vi. During this set-up cycle a test-information pattern is recorded with different write intensities Is in addressable zones on the record carrier. Subsequently, these test-information patterns are read and by means of the analysis sign Va derived from the read signal it is determined which test-information pattern has been recorded with the optimum write intensity, and the write intensity Is during recording of the information signal Vi is set to the write intensity corresponding to the test-information pattern thus found. An embodiment of a recording device in which the intensity is determined in conformity with the method described above is shown in Fig. 9. The recording device shown therein comprises drive means in the form of a motor 100 and a turntable 101 for rotating a radiation-sensitive record carrier 4' about an axis 102 which record carrier is of a type on which address information has been recorded by means of a track modulation of a servo track. Such a record carrier 4' is described comprehensively in Netherlands Patent Application NL-A-8800151, NL-A-8900766 and NL-A-8901145 (PHN 12.398, PHN 12.887, PHN12 925). The record carrier described in said Patent Applications has a "wobbling" servo track, the frequency of the wobble being modulated in conformity with a position-information signal comprising absolute time codes ATIP. An optical read/write head 105 of a customary type is arranged opposite the rotating record carrier 4' and can be moved in a radial direction relative to the record carrier 4' by means of a positioning device, for example in the form of a motor 103 and a spindle 104. If desired, the read/write head 105 can be employed both for recording information patterns and for reading information patterns. For this purpose the read/write head 105 comprises a semiconductor laser for generating a radiation beam 107a whose intensity is variable by means of a control circuit 107. In known manner the radiation beam 107 is aimed at the servo track of the record carrier 4'. The beam 107a is partly reflected from the record carrier 4', the reflected beam being modulated in conformity with the track wobble and, if an information pattern has been recorded, also in conformity with the information pattern. The reflected beam is directed towards a radiation sensitive detector 108a, which generates a read signal Vl″ corresponding to the beam modulation. The signal Vl″ comprises a component produced by the track wobble and having a frequency of approximately 22 kHz at the nominal scanning velocity. By means of a motor control circuit 108 for controlling the motor 100 the motor speed is controlled so as to maintain the frequency of the component produced in the read signal Vl″ by the track wobble at substantially 22 kHz. The read signal Vl″ is also applied to a detection circuit 109, which derives the time codes ATIP from the component produced in the read signal Vl″ produced by the track wobble and applies these codes to a processing unit comprising, for example, a microcomputer 110. Moreover, the read signal Vl″ is applied to an amplifier circuit 111 having a high-pass characteristic to reject the signal components produced in the read signal Vl″ by the track wobble. The read signal Vl′, from which the low-frequency components have thus been removed, is applied to the analysis circuit 65, for example the circuit shown in Fig. 8. The analysis signal Va on the output of the analysis circuit 65 is also applied to the microcomputer 110. The recording device further comprises a customary CIRC encoding circuit 112, to which the signal Vi to be recorded can be applied via a switch 115 which is controlled by the microcomputer 110. The CIRC encoding circuit 112 is arranged in series with a conventional EFM modulator 113. The EFM modulator has its output connected to the control circuit 107. The control circuit 107 is of a controllable type, which is coupled to the microcomputer 110 to receive control signals. Depending on the control signals received from the microcomputer 110 the control circuit 107 sets the intensity of the generated beam 107a to a constant low intensity Il, or the control circuit 107 switches the intensity of the beam between the low level Il and the write level Is in conformity with the EFM-modulated signal received from the EFM modulator 113. Moreover, the write level Is can be adjusted by the microcomputer 110. Fig. 10 shows an embodiment of the circuit 107, which bears much resemblance to the circuit shown in Fig. 5 for controlling the intensity of the semiconductor laser 51. In Fig. 10 elements corresponding to those in Fig. 5 bear the same reference numerals. The circuit 107 comprises a two-input AND gate 115, the EFM-modulated signal Vefm supplied by the EFM modulator 113 being applied to one of its inputs and a control signal L/S from the microcomputer 110 being applied to its other input. If the control signal L/S assumes the logic "0" value the logic value on the output of the AND gate 115 also becomes 0. The output signal of the AND gate 115 is applied to the control input of the switch 62, which is constructed in such a way that in the case of a control signal of the logic value "0" the signal Il corresponding to the low intensity level Il is applied to the circuit 58, so that the intensity of the beam 107a produced by the laser 106 is set to the value Il. In the case that the logic value of the control signal L/S is "1" the logic value on the output of the AND gate 115 will vary in conformity with the signal EFM, so that the intensity of the beam 107a is then alternately set to the write intensity Is and the intensity Il in conformity with the signal Vefm. For the purpose of generating a test-information pattern the recording device shown in Fig. 9 comprises a signal generator 114, which generates for example an arbitrary digital signal or which generates a signal corresponding to the digital signal value zero (digital silence). The signal generated by the signal generator 114 is applied to the CIRC encoding circuit 112 via the switch 115. The switch 115 is of a customary type which, depending on the control signal received from the microcomputer 110, transfers either the signal Vi to be recorded or the output signal of the signal generator 114.

As stated above, the test-information patterns are preferably recorded at addressable locations on the record carrier 4'. If the record carrier 4' is configured in conformity with the aforementioned Netherlands Patent Application (PHN 12.887), in which the servo track is divided, in this order, into an area (PMA) for recording a temporary table of contents (Temporary TOC), an area (Lead In Area) for the storage of the definitive table of contents (TOC), and a program area (PA), the test-information patterns are preferably recorded in an area (PCA) which precedes the area (PMA) for recording the temporary table of contents. By way of illustration Fig. 11 shows a layout of the servo track 116. Moreover, Fig. 11 shows start positions for the various areas indicated by means of absolute time codes ATIP expressed in minutes, second and frames. For example, the absolute time code ATIP for the beginning of the program area is 0.00.00. The absolute time code ATIP at the beginning of the lead-in area is marked by TLIA. The absolute time code ATIP at the beginning of the area PMA is equal to TLIA minus 0.13.15, while the beginning of the area PCA has an absolute time code equal to TLIA minus 0.34.00. Every absolute time code ATIP marks a servo-track portion having a length corresponding to one frame. Thus, in the area PCA, 1560 frames are available for recording the test patterns. Since an area corresponding to 15 frames is long enough to determine the optimum write intensity the total length of the area PCA is amply sufficient to carry out the set-up cycle one hundred times. If the record carrier is used for recording standard CD signals this number if amply sufficient to carry out one set-up cycle for every information signal to be recorded. This is because in accordance with the CD-standard the maximum number of different information signals (tracks) is one hundred. Preferably, for each of the possible one hundred different information signals (tracks) a predetermined section having a length of 15 frames (briefly referred to as the 15-frame area) is reserved in the PCA area.

Since the read-out of the ATIP codes in the areas in which already a test-information pattern has been recorded is not always guaranteed the sequence in which the "15-frame" areas are used is suitably from back to front, i.e. the first "15-frame" area to be used is situated at the end (i.e. near the boundary with the PMA area) of the PCA area. For recording a subsequent information signal (track) having a sequence number n in the temporary table of contents a "15-frame" area is used which is situated n "15-frame" areas before the end of the PCA area. In this way it is achieved that an area used for determining the optical write intensity is always preceded by a comparatively large area in which no information pattern has been recorded yet. This is an advantage because in a servo-track portion in which already an information pattern has been recorded the absolute time code ATIP cannot always be read reliably, although this is necessary for determining the beginning of the "15-frame" area to be used. The optimum write intensity can be determined as follows: before a new information signal (track) is recorded the number of information signals (tracks) already recorded is determined by means of the data in the temporary table of contents in the PMA area. The address of the "15-frame" area for recording the test-information pattern is derived from said number. Subsequently, a test-information pattern, preferably a test pattern as shown in Fig. 4 or a similar test pattern, for example a pattern corresponding to an EFM signal, is recorded with a number of different write-intensity settings in the "15-frame" area having the specified address. After this the recorded test-information pattern is read and by means of the analysis signal Va it is determined in which part of the area the test-information pattern is optimum. Subsequently, the information signal is recorded with a write intensity corresponding to the write intensity with which the optimum test-information pattern has been recorded.

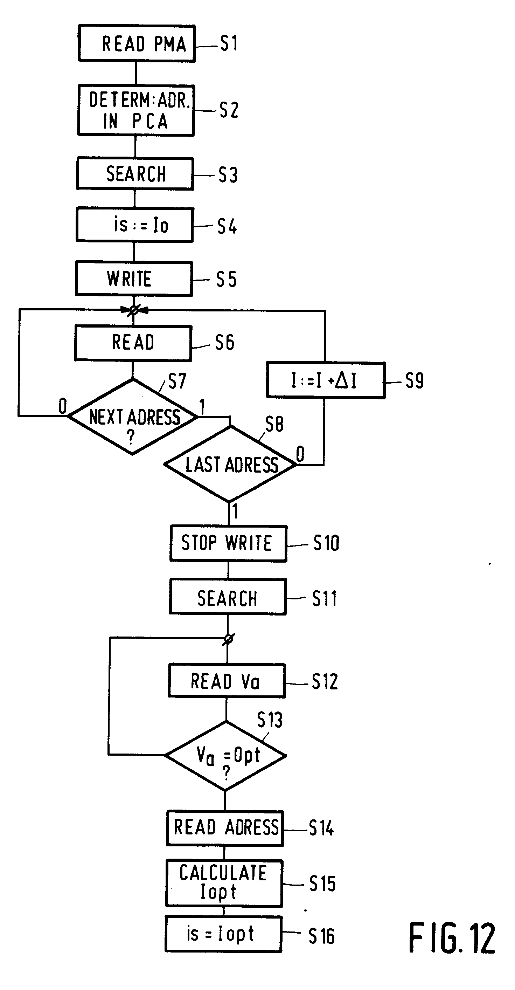

The microcomputer 110 is loaded with a suitable control program for carrying out the set-up cycle. Fig. 12 is a flow chart of an example of such a program. In step S1 of this program the read/write head 105 is positioned opposite the PMA area on the record carrier under control of the microcomputer 110, addressing being effected by means of the absolute time codes ATIP in the read signal VI″ detected by the detection circuit 109. In step 52 the temporary table of contents is read from the PMA area and the address of the "15-frame" area to be used for recording the test-information pattern is derived from the information about the number of previously recorded information signals in the temporary table of contents. In step S3 the 15-frame area having the said address is located under control of the microcomputer 110. Once this area is reached the write intensity Is is set to an initial value Io in step 54. Preferably, the value of Io for the relevant record carrier is prerecorded on the record carrier in a manner as described in the aforementioned Patent Application NL-A-8901145 (PHN 12.925). This value can then be read prior to the set-up cycle. Moreover, under control of the microcomputer 110 the signal generator 114 is connected to the CIRC encoding circuit 112 by means of the controllable switch 114, so that an EFM modulated test signal determined by the output signal of the signal generator is generated by the EFM modulator 113. Finally, in step S5 the control signal S/L sets the control circuit 107 in such a way that the intensity of the beam 107a is switched between the set value of the write intensity Is and the intensity Il in conformity with the EFM modulated signal Vefm on the output of the EFM modulator 113, which results in a test-information pattern corresponding to an EFM signal being recorded. In step S6 the absolute time code ATIP detected by the detection circuit 109 is read out by the computer 110. In step S7 it is ascertained whether this absolute time code has changed relative to the previous read-out. If this is not the case step S6 is repeated. If it has changed it is tested in step S8 whether the absolute time code being read indicates the end of the 15-frame area. If this is not the case step S9 is carried out, in which the write intensity Is is incremented by a small step Δ1, after which the program proceeds with step S6. If in step S8 it is found that the end of the 15-frame area has been reached, step S10 is performed in which the control signal S/L sets the control circuit 107 in such a way that the intensity of the beam 107 is maintained constant at the level Il. In step S11 the beginning of the said 15-frame area is located and this area is read. In step S12 the analysis signal Va is read by the microcomputer 110. In step S13 it is checked whether the value of the analysis signal Va corresponds to the optimum write intensity. If this is not the case the program proceeds with step S12. In the other case the absolute time code detected by the detection circuit 109 is read out in step S14. Subsequently, in step S15 the optimum write intensity corresponding to the absolute time code read in step S14 is computed. This is possible, for example, by determining the difference between the absolute time code last read and the time code corresponding to the beginning of the 15-frame area. By means of this difference it is possible to determine by how many steps Δl the initial value Io has been incremented before the absolute time codes ATIP last read was reached during recording of the test-information pattern. This number of steps and the initial value Io define the optimum write energy Iopt. Finally, in step S16 the write intensity Is is set to the optimum value Iopt.

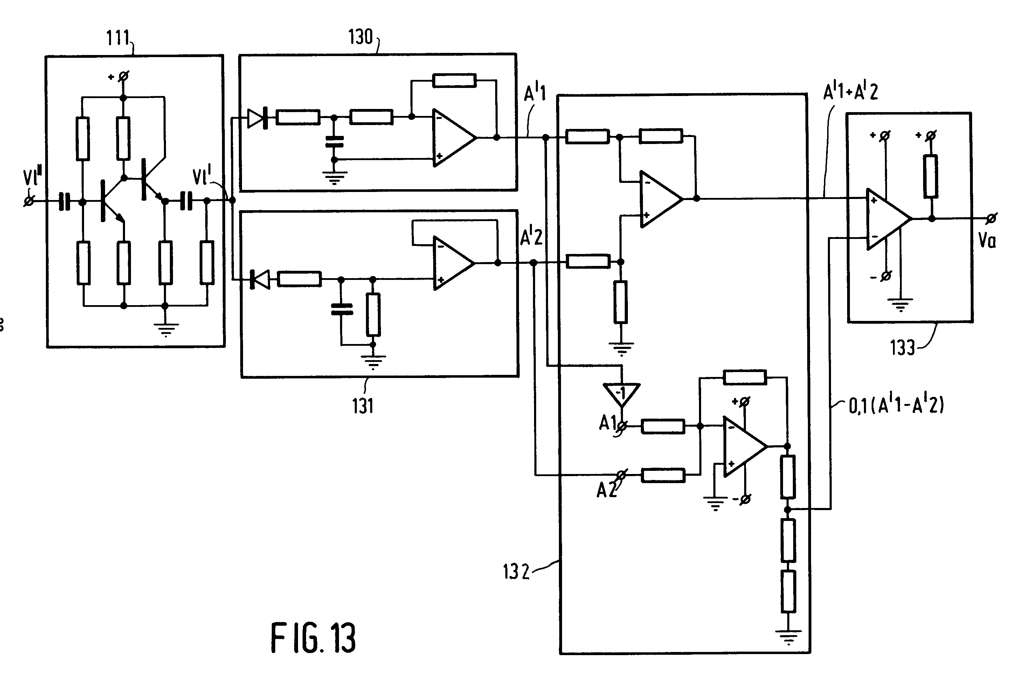

All the embodiments of the analysis circuit 65 described above supply an analysis signal Va which specifies both the magnitude and the sign of the deviation of the d.c. level DC in the read signal from the optimum level. However, this is not necessary for the embodiment of recording device shown in Fig. 9. In this device it is adequate to use an embodiment of the analysis circuit 67 in which a logic signal indicates whether the position of the d.c. level DC is situated within a specific small range around the optimum level. An embodiment which generates such a logic signal as the analysis signal Va is shown in Fig. 13. In this embodiment the read signal Vl', from which the d.c. component has been removed, by means of a filter circuit 111, is applied to a positive-peak detector 130 and a negative-peak detector 131, which determine the maximum signal value (A1') and the minimum signal value (A2') in the read signal Vl'. The output signals of the peak detectors 130 and 131 representing said maximum value A1' and said minimum value A2' are applied to a computing circuit 132, which in a customary manner generates two signals representing the value of the sum of A1' and A2' and the value of one tenth of the difference between A1' and A2' respectively. The two output signals for the computing circuit 132 are applied to a window comparator circuit 133, comprising for example an integrated circuit of the type LM311. The window comparator circuit 113 exclusively supplies a logic "1" signal if the absolute value of (A1' + A2') - 0.1 (A1' - A2') is smaller than or equal to Σ, Σ being a small value larger than zero. The value of Σ is selected, for example, in such a way that a logic "1" signal is generated if

$$\beta = \frac{A1' + A2'}{A1' - A2'}$$

is between 0.09 and 0.11. Again the logic signal on the output of the comparator circuit 133 serves as the analysis signal Va.

## Claims

1. A recording device for recording on a record carrier (4) an information pattern of recording areas having first optical properties, which areas alternate with intermediate areas having second optical properties, which recording device comprises optical write means (50) including means for scanning the record carrier with the aid of a write beam (13), modulation means (62) for switching the intensity of the write beam (13), in conformity with a bivalent signal ($V_{efm}$) of a specific duty cycle, between a low intensity which does not bring about a change in optical properties of the record carrier at the scanning location, and a high write intensity which brings about an optically detectable change of the record carrier at the scanning location, the recording device further comprising optical read means (50) including means for scanning the information pattern thus formed with the aid of a read beam (53), the read beam being modulated by the information pattern being scanned, a radiation sensitive detector (64) for converting the modulated read beam (53) into a corresponding read signal ($V_L$), which recording device further comprises an analysis circuit (65) for deriving from the read signal ($V_L$) an analysis signal ($V_a$) which indicates the deviation of the average ratio between the length of the recording areas and the intermediate areas relative to an optimum ratio defined by the duty cycle, and means (66,67) for setting the write intensity, depending on the analysis signal ($V_a$), to a value for which the ratio between the lengths of the recording areas and the intermediate areas substantially corresponds to the optimum ratio defined by the duty cycle, characterized in that the analysis circuit (65) comprises means (70-73; 90-95; 85-85) for determining the position of the d.c. component of the read signal ($V_L$) relative to minimum and maximum values of the read signal and for generating an analysis signal ($V_a$) in the form of a signal which indicates whether the position thus determined deviates from a position defined by the duty cycle.

2. A recording device as claimed in Claim 1, characterized in that the analysis circuit comprises means (80,81; 111,130) for determining a first difference value ($A1'$) between the d.c. value of the read signal ($V_L$) and the maximum values of the read signal ($V_L$), means (80,82; 111,131) for determining a second difference value ($A2'$) between minimum values of the read signal and the d.c. value, and means (83-85; 132,133) for deriving the analysis signal ($V_a$) on the basis of the first and the second difference value.

3. A recording device as claimed in Claim 2, characterized in that the analysis circuit (65) comprises a high-pass filter (111) for eliminating the d.c. component in the read signal ($V_L$), a first peak detector (130) for determining the maximum signal value ($A1'$) in the read signal ($V_L'$) filtered by the high-pass filter (111) as the first difference value, a second peak detector (131) for determining the minimum signal value ($A2'$) in the filtered read signal as the second difference value, means (132,133) for generating an analysis signal ($V_a$) in the form of a signal which indicates whether the sum of the detected minimum and maximum values corresponds to an optimum value defined by the duty cycle.

4. A recording device as claimed in Claim 2 or 3, characterized in that the analysis circuit (65; 80-85) is adapted to supply an analysis signal ($V_a$) in the form of a signal which indicates whether the ratio between the sum of the first and the second difference value ($A1',A2'$) and the difference between the first and the second difference value ($A1'$, $A2'$) substantially corresponds to an optimum value defined by the duty cycle.

5. A recording device as claimed in Claim 4, characterized in that the bivalent signal ($V_{efm}$) is a standard EFM signal, the optimum value defined by the duty cycle being substantially equal to 0.1.

6. A recording device as claimed in any one of the preceding Claims, characterized in that the device is adapted to form information patterns comprising first subpatterns (40) and second subpatterns (41), the spatial frequency of the second subpatterns (41) being lower than that of the first subpatterns (40) and the number of first subpatterns (40) being larger than the number of second subpatterns (41), the dimensions of the subpatterns being selected in such a way that during reading of information patterns the amplitude of the signal components corresponding to the first subpatterns (40) is smaller than the amplitude of the signal components corresponding to the second subpatterns (41).

7. A recording device as claimed in any one of the preceding Claims, characterized in that the device comprises means (114) for generating a bivalent test signal, control means (110) for causing test-information patterns corresponding to the test signal to be recorded at addressable locations on the record carrier (4), the control means being further adapted to cause test-information patterns to be read by the optical read means (50), the means (65,107,110,111) for setting the write intensity being adapted to set the optimum write intensity in response to the analysis signals ($V_a$) obtained during reading of the test-information patterns.

8. A recording device as claimed in Claim 7, characterized in that the control means (110) are adapted to cause the test-information patterns to be recorded on the record carrier in a section, defined by specific addresses, within a predetermined area provided with previously applied address information in such a way that the beginning of the section adjoins an area in which no test-information patterns have been recorded yet.

**Patentansprüche**

1. Aufzeichnungseinrichtung zum Aufzeichnen eines Informationsmusters aus Aufzeichnungsgebieten mit ersten optischen Eigenschaften auf einem Aufzeichnungsträger (4), wobei die Gebiete mit Zwischengebieten mit zweiten optischen Eigenschaften abwechseln, welche Aufzeichnungseinrichtung optische Schreibmittel (50) umfaßt, einschließlich Mitteln zum Abtasten des Aufzeichnungsträgers mit Hilfe eines Schreibbündels und Modulationsmitteln (62) zum Schalten der Intensität des Schreibbündels (13), entsprechend einem zweiwertigen Signal ($V_{efm}$) mit einem bestimmten Tastverhältnis, zwischen einer niedrigen Intensität, die keine Änderung von optischen Eigenschaften des Aufzeichnungsträgers am Abtastort bewirkt, und einer hohen Intensität, die eine optisch detektierbare Änderung des Aufzeichnungsträgers am Abtastort bewirkt, wobei die Aufzeichnungseinrichtung außerdem optische Auslesemittel (50) umfaßt einschließlich Mitteln zum Abtasten des so mit Hilfe eines Lesebündels (53) gebildeten Informationsmusters, wobei das Lesebündel von dem abgetasteten Informationsmuster moduliert wird, und einem strahlungsempfindlichen Detektor (64) zum Umsetzen des modulierten Lesebündels (53) in ein entsprechendes Lesesignal ($V_L$), wobei die Aufzeichnungseinrichtung außerdem eine Analyseschaltung (65) zum Ableiten eines Analysesignals ($V_a$) aus dem Lesesignal ($V_L$) umfaßt, welches Analysesignal die Abweichung des mittleren Verhältnisses der Länge der Aufzeichnungsgebiete zu der der Zwischengebiete relativ zu einem durch das Tastverhältnis definierten optimalen Verhältnis angibt, und Mittel (66, 67) zum Einstellen der Schreibintensität in Abhängigkeit von dem Analysesignal ($V_a$) auf einen Wert, für den das Verhältnis der Länge der Aufzeichnungsgebiete zu der der Zwischengebiete im wesentlichen mit dem durch das Tastverhältnis definierten optimalen Verhältnis übereinstimmt, dadurch gekennzeichnet, daß die Analyseschaltung (65) Mittel (70-73; 90-95; 80-85) umfaßt zur Bestimmung der Lage der Gleichspannungskomponente des Lesesignals ($V_L$) in bezug auf maximale und minimale Werte des Lesesignals und zur Erzeugung eines Analysesignals ($V_a$) in Form eines Signals, das angibt, ob die so bestimmte Lage von einer durch das Tastverhältnis definierten Lage abweicht.

2. Aufzeichnungseinrichtung nach Anspruch 1, dadurch gekennzeichnet, daß die Analyseschaltung Mittel (80, 81; 111, 130) zur Bestimmung eines ersten Differenzwertes (A1′) zwischen dem Gleichspannungswert des Lesesignals ($V_L$) und den maximalen Werten des Lesesignals ($V_L$) umfaßt, sowie Mittel (80, 82; 111, 132) zur Bestimmung eines zweiten Differenzwertes (A1′) zwischen den minimalen Werten des Lesesignals und dem Gleichspannungswert und Mittel (83-85; 132, 123) zum Ableiten des Analysesignals ($V_a$) auf der Basis des ersten und des zweiten Differenzwertes.

3. Aufzeichnungseinrichtung nach Anspruch 2, dadurch gekennzeichnet, daß die Analyseschaltung (65) einen Hochpaß (111) zum Beseitigen der Gleichspannungskomponente im Lesesignal ($V_L$) umfaßt, einen ersten Spitzenwertdetektor (130) zur Bestimmung des maximalen Signalwertes (A1′) in dem von dem Hochpaß (111) gefilterten Lesesignal ($V_L$′) als ersten Differenzwert, einen zweiten Spitzenwertdetektor (131) zur Bestimmung des minimalen Signalwertes (A2′) in dem gefilterten Lesesignal ($V_L$′) als zweiten Differenzwert, Mittel zur Erzeugung eines Analysesignals ($CV_a$) in Form eines Signals, das angibt, ob die Summe aus den detektierten Minimal- und Maximalwerten mit einem durch das Tastverhältnis definierten optimalen Wert übereinstimmt.

4. Aufzeichnungseinrichtung nach Anspruch 2 oder 3, dadurch gekennzeichnet, daß die Analyseschaltung (65, 80-85) eingerichtet ist, ein Analysesignal ($V_a$) in Form eines Signals zu liefern, das angibt, ob das Verhältnis der Summe aus dem ersten und dem zweiten Differenzwert (A1′, A2′) zu der Differenz zwischen dem ersten und dem zweiten Differenzwert (A1′, A2′) im wesentlichen mit einem durch das Tastverhältnis definierten optimalen Wert übereinstimmt.

5. Aufzeichnungseinrichtung nach Anspruch 4, dadurch gekennzeichnet, daß das zweiwertige Signal ($V_{efm}$) ein Standard-EFM-Signal ist, wobei der durch das Tastverhältnis definierte optimale Wert nahezu gleich 0,1 ist.

6. Aufzeichnungseinrichtung nach einem der vorhergehenden Ansprüche, dadurch gekennzeichnet, daß die Einrichtung eingerichtet ist, Informationsmuster mit ersten Teilmustern (40) und zweiten Teilmustern (41) zu bilden, wobei die Raumfrequenz der zweiten Teilmuster (41) kleiner als die der ersten Teilmuster (40) ist und die Anzahl erster Teilmuster (40) größer als die Anzahl zweiter Teilmuster (41) ist, und wobei die Abmessungen der Teilmuster so gewählt sind, daß beim Auslesen von Informationsmustern die Amplitude der den ersten Teilmustern (40) entsprechenden Signalkomponenten kleiner als die Amplitude der den zweiten Teilmustern (41) entsprechenden Signalkomponenten ist.

7. Aufzeichnungseinrichtung nach einem der vorhergehenden Ansprüche, dadurch gekennzeichnet, daß die Einrichtung Mittel (114) zur Erzeugung eines zweiwertigen Testsignals umfaßt, Steuerungsmittel (110), die dafür sorgen, daß dem aufzuzeichnenden Testsignal entsprechende Testinformationsmuster an adressierbaren Stellen auf dem Aufzeichnungsträger (4) aufgezeichnet werden, wobei die Steuerungsmittel weiterhin eingerichtet sind, dafür zu sorgen, daß Testinformationsmuster von den optischen Auslesemitteln (50) gelesen werden, wobei die Mittel (65, 107, 110, 111) zum Einstellen der Schreibintensität dazu eingerichtet sind, anhand der beim Lesen der Testinformationsmuster erhaltenen Analysesignale ($V_a$) die optimale Schreibintensität einzustellen.

8. Aufzeichnungseinrichtung nach Anspruch 7, dadurch gekennzeichnet, daß die Steuerungsmittel (110) so eingerichtet sind, daß sie dafür sorgen, daß die Testinformationsmuster auf dem Aufzeichnungsträger in einem durch bestimmte Adressen definierten Abschnitt innerhalb eines zuvor bestimmten, mit zuvor angebrachter Adreßinformation versehenen Gebiets aufgezeichnet werden, und zwar so, daß der Anfang des Abschnitts an ein Gebiet grenzt, in dem noch keine Testinformationsmuster aufgezeichnet worden sind.

**Revendications**

1. Dispositif d'enregistrement pour enregistrer sur un support d'enregistrement (4) une configuration d'information en zones d'enregistrement présentant de premières propriétés optiques, lesdites zones alternant avec des zones intermédiaires présentant de deuxièmes propriétés optiques, ledit dispositif d'enregistrement comporte des moyens d'enregistrement optiques (50) y compris des moyens pour explorer le support d'enregistrement à l'aide d'un faisceau d'enregistrement (13), des moyens de modulation (62) pour commuter l'intensité du faisceau d'enregistrement (13) en conformité avec un signal bivalent (Vefm) présentant un rapport cyclique spécifique, entre une faible intensité ne provoquent aucun changement des propriétés optiques du support d'enregistrement à l'endroit d'exploration, et une intensité d'enregistrement élevée provoquant un changement optiquement détectable du support d'enregistrement à l'endroit d'exploration, le dispositif d'enregistrement comportant encore des moyens de lecture optiques (50) y compris des moyens pour explorer la configuration d'information ainsi formée à l'aide d'un faisceau de lecture (53), le faisceau de lecture étant modulé par la configuration d'information qui est explorée, un détecteur sensible au rayonnement (64) pour convertir le faisceau de lecture modulé (53) en un signal de lecture correspondant (VL), ledit dispositif comportant de plus un circuit d'analyse (65) pour dériver du signal de lecture (VL) un signal d'analyse (Va) indiquant l'écart du rapport moyen entre la longueur des zones d'enregistrement et les zones intermédiaires relatif à un rapport optimal défini par le rapport cyclique, et des moyens (66, 67) pour ajuster l'intensité d'enregistrement, en fonction du signal d'analyse (Va) sur une valeur pour laquelle le rapport entre les longueurs des zones d'enregistrement et les zones intermédiaires correspond sensiblement au rapport optimal défini par le rapport cyclique, caractérisé en ce que le circuit d'analyse (65) comporte des moyens (70 à 73; 90 à 95; 80 à 85) pour déterminer la position de la composante de courant continu du signal de lecture (VI) par rapport aux valeurs minimales et maximales du signal de lecture et pour engendrer un signal d'analyse (Va) en forme d'un signal indiquant si la position ainsi déterminée s'écarte d'une position définie par le rapport cyclique.

2. Dispositif d'enregistrement selon la revendication 1, caractérisé en ce que le circuit d'analyse comporte des moyens (80, 81, 111, 130) pour déterminer une première valeur différentielle (A1′) entre la valeur de courant continu du signal de lecture (VI) et les valeurs maximales du signal de lecture (VI), des moyens (80, 82, 111, 131) pour déterminer une deuxième valeur différentielle (A2′) entre les valeurs minimales su signal de lecture et la valeur de courant continu, et des moyens (83 à 85; 132, 133) pour dériver le signal d'analyse (Va) basé sur la première et la deuxième valeur différentielle.

3. Dispositif d'enregistrement selon la revendication 2, caractérisé en ce que le circuit d'analyse (65) comporte un filtre passe-haut (111) pour éliminer la composante de courant continu présente dans le signal de lecture (VI), un premier détecteur de crête (130) pour déterminer la valeur de signal maximale (A1′) dans le signal de lecture (VI′), filtré par le filtre passe-haut (111), comme la première valeur différentielle, un deuxième détecteur de crête (131) pour déterminer la valeur de signal minimale (A2′) contenue dans le signal de lecture filtré comme la deuxième valeur différentielle, des moyens (132, 133) pour engendrer un signal d'analyse (Va) en forme d'un signal indiquant si la somme des valeurs minimale et maximale détectées correspond à une valeur optimale définie par le rapport cyclique.

4. Dispositif d'enregistrement selon la revendication 2 ou 3, caractérisé en ce que le circuit d'analyse (65, 80 à 85) est conçu pour fournir un signal d'analyse (Va) en forme d'un signal indiquant si le rapport entre la somme de la première et de la deuxième valeur différentielle (A1′, A2′) et la différence entre la première et la deuxième valeur différentielle (A1′, A2′) correspond sensiblement à une valeur optimale définie par le rapport cyclique.

5. Dispositif d'enregistrement selon la revendication 4, caractérisé en ce que le signal bivalent (Vefm) est un signal standard EFM, la valeur optimale définie par le rapport cyclique étant sensiblement égale à 0,01.

6. Dispositif d'enregistrement selon l'une quelconque des revendications précédentes, caractérisé en ce que le dispositif est conçu pour former des configurations d'information comportant de premières sous-configurations (40) et de deuxièmes sous-configurations (41), la fréquence spatiale des deuxièmes sous-configurations (41) étant inférieure à celles des premières sous-configurations (40) et le nombre de premières sous-configurations (40) étant supérieur à celui de deuxièmes sous-configurations (41), les dimensions des sous-configurations étant choisies de façon que pendant la lecture des configurations d'information la valeur des composantes de signal correspondant aux premières sous-configurations (40) soit inférieure à celle des composantes de signal correspondant aux deuxièmes sous-configurations (41).

7. Dispositif d'enregistrement selon l'une quelconque des revendications précédentes, caractérisé en ce que le dispositif comporte des moyens (114) pour engendrer un signal d'essai bivalent, des moyens de commande (110) provoquant l'enregistrement de configurations d'information d'essai correspondant au signal d'essai à des endroits adressables sur le support d'information (4), les moyens de commande étant en outre conçus de façon à provoquer la lecture des configurations d'information d'essai par les moyens de lecture optiques (50), des moyens (65, 107, 110, 111) pour ajuster l'intensité de lecture sur l'intensité d'enregistrement optimale en réaction aux signaux d'analyse (Va) obtenus lors de la lecture des configurations d'information d'essai.

8. Dispositif d'enregistrement selon la revendication 7, caractérisé en ce que les moyens de commande (110) sont conçus de façon à provoquer l'enregistrement des configurations d'information d'essai sur le support d'enregistrement dans une partie définie par les adresses spécifiques, dans les limites d'une zone prédéfinie contenant de l'information d'adresse précédemment appliquée de façon que le commencement de la partie soit contiguë à une zone qui est encore exempte de configurations d'information d'essai.

FIG.1

FIG.2

FIG.3a          FIG.3b          FIG.3c

EP 0 404 251 B1

FIG.4a

FIG.4b

FIG.4c

FIG.5

FIG.6

**FIG.7**

$$Va = \frac{A1' + A2'}{A1' - A2'} = B$$

**FIG.8**

EP 0 404 251 B1

103 115 Vi 112 CIRC 113 EFM 107a 105 101 100 102 4' 106 108a 104 til Vl'' 107 Vefm 108 111 L/S is 109 65 Va μP 114 110

**FIG.9**

<u>107</u>

is

il

62

58

59

106

115

56

Vefm    L/S

# FIG. 10

| PCA | PMA | LEAD IN AREA | PROGRAM AREA |

116

TLIA-00,34.00     TLIA-0.13.15     TLIA     0:00:00 ◄——— ATIP

# FIG. 11

FIG.12

FIG.13